Europäisches
Patentamt

European
Patent Office

Office européen
des brevets

(11) **EP 3 447 885 B1**

(12) **EUROPEAN PATENT SPECIFICATION**

(45) Date of publication and mention
of the grant of the patent:
**13.04.2022 Bulletin 2022/15**

(21) Application number: **17187923.2**

(22) Date of filing: **25.08.2017**

(51) International Patent Classification (IPC):
**H02J 50/00** *(2016.01)* **H02J 50/50** *(2016.01)*

(52) Cooperative Patent Classification (CPC):
**H02J 50/50; H02J 50/001;** H02J 50/90

(54) **A SYSTEM FOR HARVESTING ENERGY.**

SYSTEM ZUR GEWINNUNG VON ENERGIE.

SYSTÈME DE COLLECTE D'ÉNERGIE.

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**27.02.2019 Bulletin 2019/09**

(73) Proprietor: **Vestel Elektronik Sanayi ve Ticaret A.S.
45030 Manisa (TR)**

(72) Inventor: **KURT, Olkan
45030 Manisa (TR)**

(74) Representative: **Kehl, Ascherl, Liebhoff & Ettmayr
Patentanwälte Partnerschaft mbB
Emil-Riedel-Straße 18
80538 München (DE)**

(56) References cited:
**US-A1- 2014 077 613**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 447 885 B1

## Description

This invention refers to a system for harvesting energy in wireless networks according to claim 1.

## Background of the Invention

Document US2014077613A1 discloses a source device configured to transmit a magnetic field via magnetic resonance with a target device which includes a source resonator including a plurality of loop circuits respectively configured to generate different magnetic fields each depending on a length of a corresponding one of the plurality of loop circuits, and a circuit selector configured to select one loop circuit among the plurality of loop circuits based on information associated with the target device.

Usually in wireless communication systems signal is transmitted from the transmitter to receiver through intermediate nodes or sensor networks. Presently, sensor networks are widely used for its very fast communication. Hence, the sensor network includes a group of tiny, externally powered devices and wireless infrastructure that sense and store conditions in any number of environments. In addition to that, before transmitting the signal, some signal processing techniques are required to transfer the signal securely without any loss of information. That is signal-processing techniques such as modulation, demodulation, decoding, encoding, converting signal from analog to digital, filtering noise and so on is required.

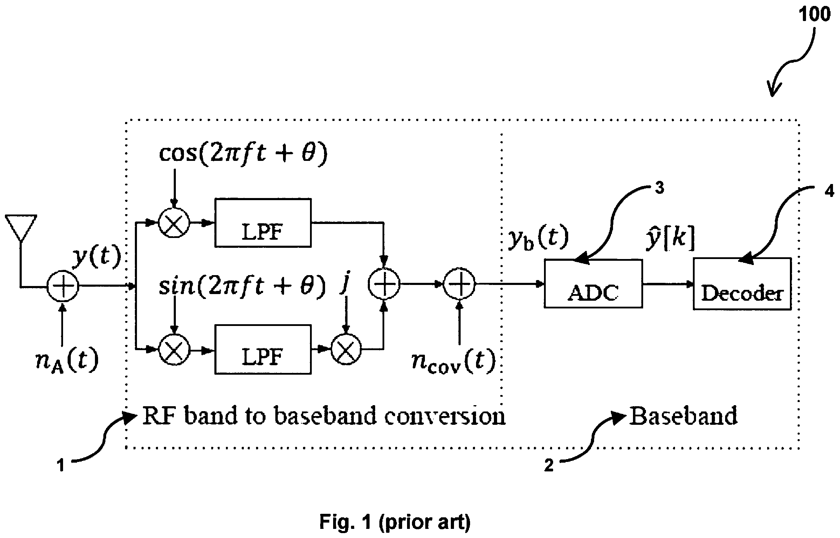

In the conventional information decoding systems at receiver side, additional components such as LPF, ADC and so on are required in order to decode the incoming signal. Fig.1 depicts the conventional information decoding systems 100 at receiver side. In that, RF band to baseband conversion 1 circuit is provided to convert the frequency band level for incoming signal before sending it to the decoder 4. After conversion, the baseband 2 is transmitted to the ADC 3 and then to the decoder 4 for obtaining the original information of the incoming signal.

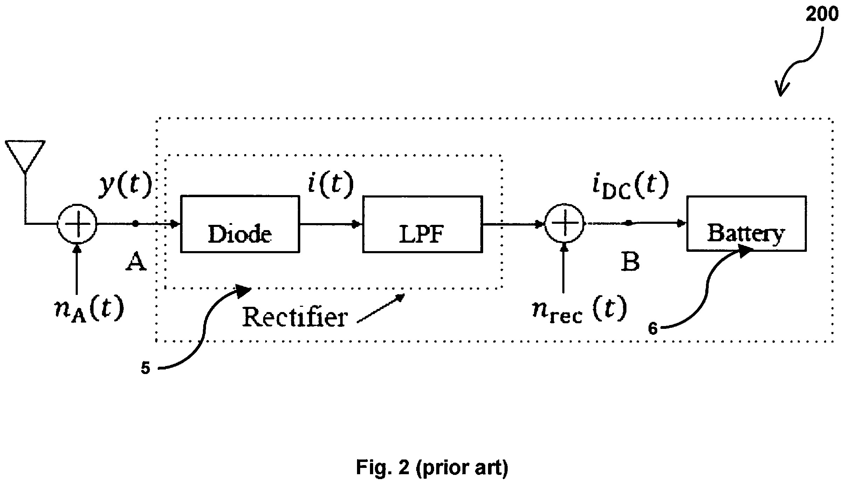

Another prior art describes about the conventional energy harvesting circuit in SWIPT systems. This type of systems may require a separate energy harvesting circuit and information decoding circuit. Fig.2 illustrates the conventional energy harvesting circuit 200 in SWIPT systems. The conventional energy harvesting circuit comprises of a rectifier 5 circuit for eliminating noise and a battery 6 for storing energy derived from the incoming signal.

The subject-matter of the prior art has a very low efficiency and requires a complex systems.

Further, the prior arts does not utilize the direction of the incoming signal for transmitting the information.

## Object of the Invention

It is therefore the object of the present invention to provide a system, in particular an energy harvesting system for wireless networks that has a higher level of efficiency compared to the known devices.

## Description of the Invention

The before mentioned object is solved by a system for harvesting energy in wireless networks according to claim 1. The system for harvesting energy in wireless networks according to the present invention preferably comprises at least one transmitter for transmitting signal, at least one receiver for receiving the signal, a plurality of relay nodes for transmitting signal from transmitter to receiver. The transmitter and receiver are energized by an external power supply. Further, the transmitter, relay nodes, and receiver are configured to be placed at a predetermined distance between each of them. The transmitter can be configured to transmit signal to the receiver by directly transmitting energy signal to energize the relay nodes. Each relay node includes a plurality of sensor located as groups and distance between each sensor configured to be different from the other relay nodes in order to achieve unique distance structures. Each relay node includes a control node for communicating information related to the sensor in the group that received the signal along with distance information to the next control node provided in the other relay node. The relay nodes harvest energy from the incoming energy signal that is transmitted along with the distance information.

This solution is beneficial since such an energy harvesting system has a higher efficiency and simple to implement.

Significantly, the energy harvesting system does not have any separate circuits for energy harvesting and information decoding. The system can be implemented in the wireless communication, especially in cellular communication and sensor network systems.

Further preferred embodiments are subject matter of dependent claims 2 and 3.

According to a preferred embodiment of the present invention, the unique distances can provide the receiver to know a source from which the information is transferred. Further, the signal transmitted between control nodes is based on the sum of the distances through a transmission path. A specific selection of the distances between sensors can generate unique sum of distances and this information can be used as data. Further, the system utilizes the direction of the incoming signal and the path of signal transmission is allowed for horizontal right direction. The receiver can decode information with the aid of the specific locations of relay nodes.

The present disclosure also refers to a method, not belonging to the scope of the invention, for harvesting energy in wireless networks. Said method preferably comprises the steps: transmitting signal from an externally energized transmitter to a receiver via a plurality of relay nodes that are placed at a predetermined distance between each of them, providing each relay node with a control node and a plurality of sensors that are located as groups with a predetermined unique distance structure, allowing the control node to communicate information related to the sensor in the group that received the signal along with a distance information, to the next control node provided in the other relay node, harvesting energy for activating relay nodes from the incoming signal that is transmitted along with distance information, and transmitting signal from the transmitter to the receiver by directly transmitting pure energy to energize relay nodes.

According to a further disclosure not belonging to the scope of the present invention, the method further comprising the steps of, transmitting the signal between control nodes based on sum of the distances through a transmission path, and selecting specific distances between sensors make unique sum of distances that is used as data.

Further benefits, goals, and features of the present invention will be described by the following specification of the attached figures, in which components of the invention are exemplarily illustrated. Components of the devices according to the invention which match at least essentially with respect to their function, can be marked with the same reference sign, wherein such components do not have to be marked or described in all figures.

The invention is just exemplarily described with respect to the attached figures in the following.

## Brief Description of the Drawings

Fig. 1    illustrates conventional information decoding systems at receiver side, according to the prior art;
Fig. 2    illustrates the conventional energy harvesting circuit in SWIPT systems, according to the prior art; and
Fig. 3    illustrates the exemplary system for harvesting energy in wireless networks, according to an embodiment of the present invention.

## Detailed Description of the Drawings

Fig. 1 illustrates the conventional information decoding systems at receiver side, according to the prior art. The detail explanation of the conventional information decoding systems at receiver side is provided in the background.

Fig. 2 illustrates the conventional energy harvesting circuit in SWIPT systems, according to the prior art. The detail explanation of the conventional energy harvesting circuit in (Simultanoues Wireless Information and Power Transfer) SWIPT systems is provided in the background.

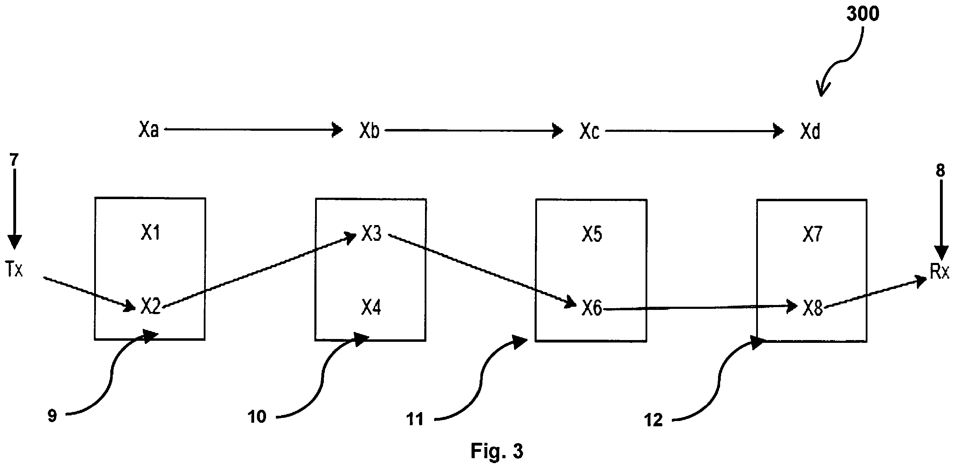

Fig. 3 illustrates the exemplary system for harvesting energy in wireless networks, according to an embodiment of the present invention. The system for harvesting energy in wireless networks according to the present invention comprises at least one transmitter 7 for transmitting signal, at least one receiver 8 for receiving the signal, a plurality of relay nodes (9, 10, 11 & 12) for transmitting signal from transmitter 7 to receiver 8. The transmitter 7 and receiver 8 are energized by an external power supply. Further, the transmitter 7, relay nodes (9, 10, 11 & 12), and receiver 8 are configured to be placed at a predetermined distance between each of them. The transmitter 7 can be configured to transmit signal to the receiver 8 by directly transmitting energy signal to energize the relay nodes (9, 10, 11 & 12). Each relay node includes a plurality of sensor located as groups and distance between each sensor configured to be different from the other relay nodes (9, 10, 11 & 12) in order to achieve unique distance structures. Each relay node includes a control node for communicating information related to the sensor in the group that received the signal along with distance information to the next control node provided in the other relay node. The relay nodes (9, 10, 11 & 12) harvest energy from the incoming energy signal that is transmitted along with the distance information.

This solution is beneficial since such an energy harvesting system has a higher efficiency and simple to implement. Significantly, the energy harvesting system does not have separate circuits for energy harvesting and information decoding. The system can be implemented in the wireless communication, especially in cellular communication and sensor network systems.

According to an exemplary embodiment of the present invention, the sensor group or relay node ($X_a$, $X_b$, $X_c$ and $X_d$) is depicted as a square box in the Fig. 3. When the transmitter 7 transmits information to the receiver 8, each relay node harvests energy from the incoming signal. The signal can be any type of signal and not modulated such that there is no need for a demodulation circuit in sensors.

Each sensor group (9, 10, 11, & 12) has a control node and each control node communicates with each other. Each control node senses region of respective group (the concept of cognitive radio) and detects whether one of the sensors in its group receives any signal. After this detection, the control node informs the next control node about the sensor in the group that received a signal, via distance information. This distance information is transmitted via energy signal to enable efficient communication between control nodes. The transmitted energy signal between control nodes are based on the sum of the distances through the transmission path. The specific selection of the distances make unique sum of distances and this information can be used as data.

The harvested energy can be formulized as

$$P_R = a \times \frac{P_T}{d^2 \times f^2} \times \frac{c}{\theta}$$

where a is the harvest efficiency, d is the distance, f is the transmit frequency, PT is the transmit power, $\theta$ is the directional angle between two nodes and c is the speed of light.

According to an exemplary embodiment, a table for distance structure between sensor nodes can be formed as depicted in the table below.

Table: 1. Distance structure between sensor nodes

| Distancebetween sensor nodes in vertical direction | Distance between sensor nodes in horizontal direction | | | | | |
|---|---|---|---|---|---|---|
| | 1 | 5 | 9 | 11 | 15 | 17 |
| | 2 | 7 | 13 | 19 | 31 | 49 |
| | 3 | 6 | 10 | 12 | 16 | 18 |
| | 4 | 8 | 14 | 20 | 32 | 50 |

For example, 1 and 2 represents the distance of X1 and X2 from the transmitter 7, respectively.

Similarly, 5 and 7 represents the distance between X1 and X3; and X2 and X4 respectively. These numbers are selected in such a way that for example, 1 + 7 + 9 + 11 path is unique and the transmission path sums to 28.

The table above provides two different options of distance selections. That is, the first two rows may be used in one system, and the other two rows may be used in another system.

This model assumes that there is a path direction of horizontally right direction and vertical transmissions are not allowed.

The control nodes transmit distance information of the previous node to the next control node to inform about the previous transmissions. For example, in the case of 2-5-13-19 path, $X_a$ transmits the energy proportional to 2 to inform $X_b$ that the energy comes from $X_2$. Then, $X_b$ transmits the energy proportional to 7 (2 + 5) to inform $X_c$ that the energy comes from $X_2$ through $X_3$. Then, $X_c$ transmits the energy proportional to 20 (2 + 5 + 7) to inform $X_d$ that the energy comes from $X_2$ and $X_3$ through $X_6$. Finally, $X_d$ transmits the energy proportional to 39 (2 + 5 + 7 + 13) to inform $R_x$ that the energy comes from $X_2$ and $X_3$ and $X_6$ through $X_8$.

The energy harvesting system does not have any separate circuits for energy harvesting and information decoding. The system can be implemented in the wireless communication, especially in cellular communication and sensor network systems.

Thus, the present invention refers to a system for harvesting energy in wireless networks which comprises of at least one transmitter 7 for transmitting signal, at least one receiver 8 for receiving the signal, a plurality of relay node 9, 10, 11 & 12 for transmitting signal from transmitter 7 to receiver 8. The transmitter 7 and receiver 8 are energized by an external power supply. Further, the transmitter 7, relay node 9, 10, 11 & 12, and receiver 8 are configured to be placed at a predetermined distance between each of them. The transmitter 7 can be configured to transmit signal to the receiver 8 by directly transmitting energy signal to energize the relay node 9, 10, 11 & 12. Each relay node includes a plurality of sensor located as groups and distance between each sensor configured to be different from the other relay node 9, 10, 11 & 12 in order to achieve unique distance structures. The relay node 9, 10, 11 & 12 harvest energy from the incoming energy signal that is transmitted along with the distance information to a control node provided in each sensor group.

**List of reference numbers**

1    RF band to baseband conversion
2    Baseband

3       ADC
4       Decoder
5       Rectifier
6       Battery
7       Transmitter
8       Receiver
9       relay node a ($X_a$)
10      relay node b ($X_b$)
11      relay node c ($X_c$)
12      relay node d ($X_d$)
$X_1$       sensor group in $X_a$
$X_2$       sensor group in $X_a$
$X_3$       sensor group in $X_b$
$X_4$       sensor group in $X_b$
$X_5$       sensor group in $X_c$
$X_6$       sensor group in $X_c$
$X_7$       sensor group in $X_d$
$X_8$       sensor group in $X_d$

**Claims**

1. A system for energy harvesting in wireless networks comprises of,

   at least one transmitter (7) for transmitting a signal,
   at least one receiver (8) for receiving the signal,
   a plurality of relay nodes (9, 10, 11 & 12) for transmitting the signal from the transmitter (7) to the receiver (8);
   wherein the transmitter (7) and the receiver (8) are energized by an external power supply;
   wherein
   the relay nodes (9, 10, 11 & 12) are placed at predetermined distances between the receiver (8) and the transmitter (7) and wherein the individual relay nodes are placed at predetermined distances to each other, wherein each of the relay nodes (9, 10, 11 & 12) includes a plurality of sensors, wherein each plurality of sensors of each relay node is located as group and wherein the distances between the sensors of each group are configured to be different from the other relay nodes (9, 10, 11 & 12) in order to achieve unique distance structures; wherein each of the relay nodes includes a control node for communicating information related to the sensors in the group that received the signal along with a distance information to the next control node provided in another relay node, wherein the other relay node is one of the other relay nodes; and wherein the other relay node (9, 10, 11 & 12) is configured to harvest energy from the incoming energy signal that is transmitted along with the distance information
   **characterized in that**

   the signal transmitted between the control nodes is based on the sum of the distances through a transmission path, wherein a specific selection of the distances between sensors generate an unique sum of distances, wherein the unique sum of distances represents distance information which is used as data.

2. The system of claim 1, wherein the unique sum of distances provide the receiver (8) to know a source from which the distance information is transferred.

3. The system of claim 1, wherein the receiver (8) is configured to decode information with the aid of specific locations of relay nodes (9, 10, 11 & 12).

**Patentansprüche**

1. Ein System zur Energieernte in drahtlosen Netzwerken umfasst,

   mindestens einen Sender (7) zum Aussenden eines Signals,
   mindestens einen Empfänger (8) zum Empfangen des Signals,

eine Vielzahl von Relaisknoten (9, 10, 11 & 12) zum Übertragen des Signals vom Sender (7) zum Empfänger (8);
wobei der Sender (7) und der Empfänger (8) durch eine externe Energieversorgung mit Energie versorgt werden; wobei
die Relaisknoten (9, 10, 11 & 12) in vorbestimmten Abständen zwischen dem Empfänger (8) und dem Sender (7) angeordnet sind und wobei die einzelnen Relaisknoten in vorbestimmten Abständen zueinander angeordnet sind,
wobei jeder der Relaisknoten (9, 10, 11 & 12) eine Vielzahl von Sensoren umfasst, wobei jede Vielzahl von Sensoren jedes Relaisknotens als Gruppe angeordnet ist und wobei die Abstände zwischen den Sensoren jeder Gruppe so konfiguriert sind, dass sie sich von den anderen Relaisknoten (9, 10, 11 & 12) unterscheiden, um eindeutige Abstandsstrukturen zu erreichen;
wobei jeder der Relaisknoten einen Steuerknoten zum Übermitteln von Informationen in Bezug auf die Sensoren in der Gruppe, die das Signal empfangen haben, zusammen mit einer Abstandsinformation an den nächsten Steuerknoten, der in einem anderen Relaisknoten vorgesehen ist, enthält, wobei der andere Relaisknoten einer der anderen Relaisknoten ist; und
wobei der andere Relaisknoten (9, 10, 11 & 12) so konfiguriert ist, dass er Energie aus dem ankommenden Energiesignal erntet, das zusammen mit der Abstandsinformation übertragen wird
**dadurch gekennzeichnet, dass**
das zwischen den Kontrollknoten übertragene Signal auf der Summe der Entfernungen durch einen Übertragungspfad basiert, wobei eine spezifische Auswahl der Entfernungen zwischen Sensoren eine eindeutige Summe von Entfernungen erzeugt, wobei die eindeutige Summe von Entfernungen Entfernungsinformationen darstellt, die als Daten verwendet werden.

2. System nach Anspruch 1, wobei die eindeutige Summe der Entfernungen dem Empfänger (8) eine Quelle angibt, von der die Entfernungsinformation übertragen wird.

3. System nach Anspruch 1, wobei der Empfänger (8) so konfiguriert ist, dass er Informationen mit Hilfe spezifischer Standorte von Relaisknoten (9, 10, 11 und 12) dekodiert.


**Revendications**

1. Un système de récolte d'énergie dans des réseaux sans fil comprend,

au moins un émetteur (7) pour transmettre un signal,
au moins un récepteur (8) pour recevoir le signal,
une pluralité de noeuds relais (9, 10, 11 et 12) pour transmettre le signal de l'émetteur (7) au récepteur (8) ;
dans lequel l'émetteur (7) et le récepteur (8) sont alimentés par une alimentation électrique externe ;
dans lequel
les noeuds de relais (9, 10, 11 & 12) sont placés à des distances prédéterminées entre le récepteur (8) et l'émetteur (7) et dans lequel les noeuds de relais individuels sont placés à des distances prédéterminées les uns des autres,
dans lequel chacun des noeuds relais (9, 10, 11 & 12) comprend une pluralité de capteurs, dans lequel chaque pluralité de capteurs de chaque noeud relais est située en tant que groupe et dans lequel les distances entre les capteurs de chaque groupe sont configurées pour être différentes des autres noeuds relais (9, 10, 11 & 12) afin de réaliser des structures de distance uniques ;
dans lequel chacun des noeuds relais comprend un noeud de commande pour communiquer des informations relatives aux capteurs du groupe qui ont reçu le signal ainsi que des informations de distance au noeud de commande suivant fourni dans un autre noeud relais, dans lequel l'autre noeud relais est l'un des autres noeuds relais ; et
dans lequel l'autre noeud de relais (9, 10, 11 et 12) est configuré pour récolter de l'énergie à partir du signal d'énergie entrant qui est transmis avec l'information de distance.
**caractérisé en ce que**
le signal transmis entre les noeuds de commande est basé sur la somme des distances à travers un chemin de transmission, dans lequel une sélection spécifique des distances entre les capteurs génère une somme unique de distances, dans lequel la somme unique de distances représente des informations de distance qui sont utilisées comme données.

2. Le système de la revendication 1, dans lequel la somme unique des distances permet au récepteur (8) de connaître une source à partir de laquelle les informations de distance sont transférées.

3.  Le système de la revendication 1, dans lequel le récepteur (8) est configuré pour décoder l'information à l'aide des emplacements spécifiques des noeuds de relais (9, 10, 11 et 12).

**Fig. 1 (prior art)**

**Fig. 2 (prior art)**

Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014077613 A1